(19) Europäisches Patentamt
European Patent Office
Office européen des brevets

(11) **EP 2 871 449 A1**

(12) **EUROPÄISCHE PATENTANMELDUNG**

(43) Veröffentlichungstag:
**13.05.2015 Patentblatt 2015/20**

(51) Int Cl.:
***G01F 1/66*** *(2006.01)*     ***G10K 11/00*** *(2006.01)*

(21) Anmeldenummer: **14003435.6**

(22) Anmeldetag: **07.10.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **30.10.2013   DE 102013018187**
**21.02.2014   DE 102014002223**
**02.04.2014   DE 102014004747**

(71) Anmelder: **Krohne AG**
**4019 Basel (CH)**

(72) Erfinder: **van Klooster, Jeroen Martin**
**4005 GN Tiel (NL)**

(74) Vertreter: **Gesthuysen Patent- und Rechtsanwälte**
**Patentanwälte**
**Postfach 10 13 54**
**45013 Essen (DE)**

(54) **Ultraschall-Durchflussmesser**

(57)     Beschrieben und dargestellt ist ein Ultraschall-Durchflussmesser für die Messung des Durchflusses eines strömenden Mediums (1), mit einem Messrohr (2) und mit einem Ultraschallwandler (3), wobei das Messrohr (2) eine Wandlertasche (4) aufweist, wobei der Ultraschallwandler (3) mit Kontakt zum strömenden Medium (1) in der Wandlertasche (4) des Messrohres (2) vorgesehen ist und ein Wandlergehäuse (5) und ein Wandlerelement (6) aufweist und wobei das Wandlergehäuse (5) ein Ultraschallfenster (8) aufweist.

Erfindungsgemäß ist ein Ultraschall-Durchflussmesser angegeben, bei dem das aus den von den Wandlertaschen (4) generierten Wirbeln resultierende Problem besser gelöst ist als im Stand der Technik, und zwar dadurch, dass eine zylinderförmige Abschirmung (9) vorgesehen ist.

Fig. 1

EP 2 871 449 A1

**Beschreibung**

Die Erfindung betrifft einen Ultraschall-Durchflussmesser für die Messung des Durchflusses eines strömenden Mediums, mit einem Messrohr und einem Ultraschallwandler, wobei das Messrohr eine Wandlertasche aufweist, wobei der Ultraschallwandler mit Kontakt zum strömenden Medium in der Wandlertasche des Messrohres vorgesehen ist und ein Wandlergehäuse und ein Wandlerelement aufweist und wobei das Wandlergehäuse ein Ultraschallfenster aufweist.

Der zuvor beschriebene Ultraschall-Durchflussmesser ist insoweit ein normaler Ultraschall-Durchflussmesser, als zu ihm ein Messrohr und ein Ultraschallwandler gehören. Unter einem Ultraschall-Durchflussmesser soll nachfolgend jedoch auch ein solcher verstanden werden, der nicht für sich ein Messrohr aufweist, bei dem das Messrohr vielmehr integraler Teil einer Leitung ist, zum Beispiel einer Rohrleitung, durch die das Medium strömt, dessen Durchfluss gemessen werden soll.

Der Einsatz von Ultraschall-Durchflussmessern hat schon seit langer Zeit in zunehmendem Maße bei der betrieblichen Durchflussmessung von Flüssigkeit und Gasen, zusammengefasst von strömenden Medien, Bedeutung gewonnen. Die Durchflussmessung mit Hilfe von Ultraschall-Durchflussmessern erfolgt, wie zum Beispiel bei magnetisch-induktiven Durchflussmessern, "berührungslos", d. h. ohne störende Einbauten in der Strömung, die stets Verwirbelungen und einen erhöhten Druckverlust zur Folge haben.

Bei Ultraschall-Durchflussmessern unterscheidet man hinsichtlich des Messverfahrens vor allem zwischen dem Doppler-Verfahren und dem Laufzeit-Verfahren, beim Laufzeit-Verfahren zwischen dem direkten Laufzeitdifferenz-Verfahren, dem Impulsfolgefrequenz-Verfahren und dem Phasenverschiebungs-Verfahren (vgl. H. Bernard "Ultraschall-Durchflussmessung" in "Sensoren, Messaufnehmer", herausgegeben von Bonfig/Bartz/Wolff im expert verlag, ferner die VDI/VDE-Richtlinie 2642 "Ultraschall-Durchflussmessung von Flüssigkeiten in voll durchströmten Rohrleitungen").

Zu Ultraschall-Durchflussmessern der in Rede stehenden Art gehören funktionsnotwendig einerseits ein Messrohr, das in der Regel zusammen mit einer Einlaufstrecke und einer Auslaufstrecke die Messstrecke darstellt, und andererseits mindestens ein Ultraschallwandler, der teilweise auch als Messkopf bezeichnet wird. Dabei ist Ultraschallwandler sehr allgemein zu verstehen. Zunächst gehören zu den Ultraschallwandlern einerseits Ultraschallsender, also Messköpfe zur Erzeugung und Abstrahlung von Ultraschallsignalen, andererseits Ultraschallempfänger, also Messköpfe zum Empfang von Ultraschallsignalen und zur Umwandlung der empfangenen Ultraschallsignale in elektrische Signale. Zu den Ultraschallwandlern gehören aber auch Messköpfe, die Ultraschallsender und Ultraschallempfänger in sich vereinigen, die also sowohl der Erzeugung und der Abstrahlung von Ultraschallsignalen als auch dem Empfang von Ultraschallsignalen und der Umwandlung der empfangenen Ultraschallsignale in elektrische Signale dienen.

Ein Ultraschallwandler des zuletzt beschriebenen Typs wird in Ultraschall-Durchflussmessern eingesetzt, die mit nur einem Ultraschallwandler arbeiten. Derartige Ultraschall-Durchflussmesser bestimmen die Geschwindigkeit des strömenden Mediums mit Hilfe der Dopplerverschiebung des an einer Inhomogenität des strömenden Mediums reflektierten Ultraschallsignals. Es ist gleichfalls denkbar, dass die Dopplerverschiebung der Ultraschallsignale über zwei ohne Versatz auf entgegengesetzten Seiten des Messrohres angeordnete Ultraschallwandler bestimmbar ist.

Auch sind Ultraschall-Durchflussmessungen möglich, die auf dem Laufzeit-Verfahren basieren und bei denen zwei Ultraschallwandler auf der selben Seite des Messrohres in Strömungsrichtung versetzt angeordnet sind, wobei die Ultraschallsignale an der den Ultraschallwandlern gegenüberliegenden Seite des Messrohres reflektiert werden. Regelmäßig sind jedoch zwei Ultraschallwandler vorgesehen, die in Strömungsrichtung des strömenden Mediums gegeneinander versetzt angeordnet sind.

Einleitend ist schon gesagt, dass zu dem in Rede stehenden Ultraschall-Durchflussmesser ein Messrohr und ein Ultraschallwandler gehören, dass das Messrohr eine Wandlertasche aufweist und dass der Ultraschallwandler mit Kontakt zum strömenden Medium in der Wandlertasche des Messrohres vorgesehen ist. Die Erfindung betrifft selbstverständlich aber auch Ultraschall-Durchflussmesser mit mehreren Ultraschallwandlern, bei denen also das Messrohr folglich auch mehrere Wandlertaschen aufweist.

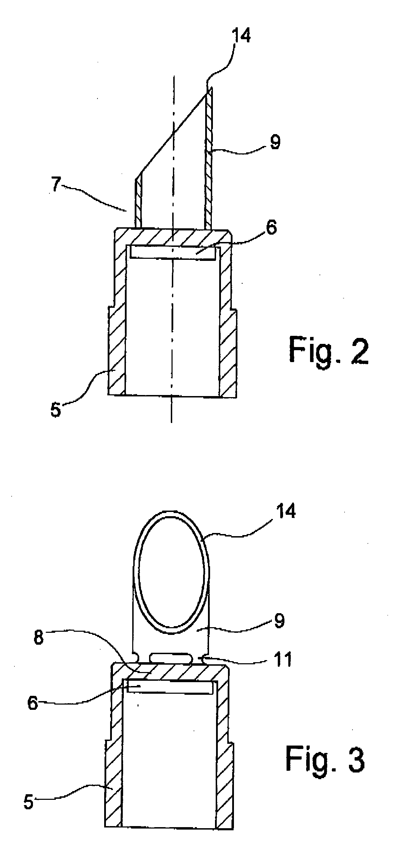

Mit Wandlertasche ist im Rahmen der Erfindung eine außerhalb des Strömungsquerschnitts des Messrohres liegende Ausnehmung oder Vertiefung, wie auch immer realisiert, gemeint, in der ein Ultraschallwandler so eingebaut ist, dass er nicht in den Strömungsquerschnitt des Messrohres, jedenfalls aber nicht wesentlich in den Strömungsquerschnitt des Messrohres hineinragt, die Strömung also nicht, jedenfalls nicht wesentlich beeinflusst. Dann, wenn mehrere Ultraschallwandler in Strömungsrichtung gegeneinander versetzt vorgesehen sind, sind diese aufeinander ausgerichtet. In der Regel verläuft die Längsachse der Wandlertaschen unter einem spitzem Winkel bzw. einem stumpfen Winkel zur Strömungsrichtung des strömenden Mediums bzw. zur Längsachse des Messrohres (vgl. das Bild 6.1.1, Seite 532 der Literaturstelle "Sensoren, Messaufnehmer", aaO, das Bild 8, Seite 18 der VDI/VDE-Richtlinie 2642, aaO, und Fig. 2-2 auf Seite 21 der Literaturstelle "Ultrasonic Measurements for Process Control" von Lawrence C. Lynnworth, ACADE- MIC PRESS, INC., herausgegeben von Harcourt Brace Jovanovich).

Es gibt auch Ultraschall-Durchflussmesser, bei denen die Ultraschallwandler nicht mit dem strömenden Medium in Kontakt kommen, also außen auf dem Messrohr angeordnet sind, sogenannte "Clamp-on-Anordnung". Die Erfindung betrifft aber nur Ultraschall-Durchflussmesser, bei denen die Ultraschallwandler Kontakt zum strömenden Medium haben.

Durch die Wandlertaschen bleibt die Strömung des in dem Messrohr strömenden Mediums nicht unbeeinflusst, vielmehr werden durch die Wandlertaschen Wirbel in der Strömung generiert. Die Untersuchung der Entstehung und die Beschreibung des Entstehungsvorgangs der Wirbel ist ein aktuelles Forschungsgebiet in der Wissenschaft. Im Wesentlichen kann die Wirbelbildung durch die Hohlraumresonanztheorie - "cavity resonance theory" - beschrieben werden. Diese Theorie soll im Folgenden kurz erläutert werden.

Ohne Beschränkung der Allgemeinheit werden die Erläuterungen anhand eines sich an einem Messrohr befindlichen Hohlraums in Form eines geöffneten Quaders ausgeführt, wobei die geöffnete Seite zum Strömungskanal hin zeigt. Diese Erläuterungen sind jedoch ohne weiteres übertragbar auf jegliche Form von Wandlertaschen. Der Hohlraum weist fünf geschlossene Seiten auf, nämlich einen Hohlraumboden und vier Seitenflächen, wobei für die Erläuterungen nur zwei Seitenflächen, nämlich eine erste Seitenfläche senkrecht zur Strömungsrichtung und eine zweite Seitenfläche senkrecht zur Strömungsrichtung relevant sind, wobei sich die erste Seitenfläche in Strömungsrichtung gesehen vor der zweiten Seitenfläche befindet.

Die bei der Erzeugung der Wirbel dominierenden Phänomene bzw. Mechanismen sind zum einen die sog. Scherschicht-Moden ("shear layer modes") und zum anderen die sog. Wake-Moden. Als eine freie Scherschicht bezeichnet man im Allgemeinen den Übergangsbereich zwischen zwei parallelen Strömungen mit unterschiedlichen Geschwindigkeiten. Die Scherschicht-Moden sind abhängig von der Länge und der Tiefe des Hohlraums, der Mach-Zahl, wobei die Mach-Zahl das Verhältnis der Geschwindigkeit des Mediums zu der Schallgeschwindigkeit in dem Medium angibt, $M = U_\infty /c$, und der Grenzflächenschichtdicke $\delta$. Als Grenzflächenschicht wird die Strömungsregion in der Nähe der Messrohrwand bezeichnet, in der die Viskositätskräfte in der gleichen Größenordnung wie die Trägheitskräfte liegen. Hierbei wird die Strecke, über die die Viskositätskräfte einen Einfluss haben, als Grenzflächenschichtdicke bezeichnet. Die Entstehung der Wirbel, bedingt durch die Scherschichtmoden wird nun wie folgt erklärt:

Zwischen dem Hohlraum und dem im Messrohr liegenden "Außenbereich" bildet sich eine freie Scherschicht aus. Diese freie Scherschicht ist in der Regel instabil und weist Störungen auf. Die Störungen der den Hohlraum umspannende freien Scherschicht treffen auf die zweite Seitenfläche des Hohlraums, also auf die in Strömungsrichtung gesehen hintere Seitenfläche. Durch den Stagnationsdruck wird ein akustischer Puls bzw. eine akustische Welle generiert, der/die sich stromaufwärts ausbreitet. Diese akustische Welle bedingt eine Druckdifferenz zwischen der akustischen Welle, die sich unterhalb der Scherschicht ausbreitet, und der sich kontinuierlich ausbreitenden akustischen Welle oberhalb der Scherschicht. Diese Druckdifferenz beeinflusst nun die Scherschicht derart, dass weitere Störungen der Scherschicht auftreten, die Scherschicht sich "zusammenrollt" und einen Wirbel formt, der sich stromabwärts verbreitet. Dieser sich stromabwärts bewegende Wirbel trifft wiederum auf die zweite Seitenfläche des Hohlraums. Dadurch wird die Feedback-Kette zur Anregung und Aufrechthaltung des Systems geschlossen, und es werden weitere Wirbel generiert. Es bildet sich also ein von periodisch instationären Druckfluktuationen dominerter Strömungszustand aus.

Durch eine von Rossiter entwickelte empirische Formel für rechteckige Hohlräume lässt sich die Hohlraum-Rücklauf-Resonanzfrequenz bestimmen. Es ist

$$St_n = \frac{f_n L}{U_\infty} = \frac{n - \alpha}{M + \dfrac{1}{\kappa}}$$

Hierbei sind $St_n$ die Strouhal-Zahl, $f_n$ die Wirbelablösefrequenz, L die Länge des Hohlraums, $U_\infty$ die Strömungsgeschwindigkeit, $\alpha$ ein Faktor, der die zeitliche Verzögerung zwischen dem Auftreffen einer Scherschichtstörung und der Emission bzw. Anfachung einer akustischen Welle/eines akustischen Pulses an der zweiten Seitenfläche des Hohlraums angibt, $\kappa$ das Verhältnis zwischen der Vortexkonvektionsgeschwindigkeit und der freien Fließgeschwindigkeit des Mediums und M die Mach-Zahl.

Anhand der angeführten Formel wird erkenntlich, dass die Strouhal-Zahl $St_n$ abhängig von der Mach-Zahl M ist. Experimentell konnte jedoch gezeigt werden, dass es auch Fälle gibt, in denen die Strouhal-Zahl $St_n$ quasi konstant, demnach also auch nahezu unabhängig von der Mach-Zahl M ist. Das führt zu der Annahme, dass der auf den Scherschicht-Moden basierende Mechanismus zur Erzeugung der Wirbel nicht der Alleinige sein kann, sondern vielmehr ein weiterer Mechanismus existieren muss, der auf rein hydrodynamischen Instabilitätsphänomenen beruht. Dieser weitere Mechanismus wird durch die sog. Wake-Moden beschrieben. Wake-Moden treten vor allem bei hohen Reynold-Zahlen auf. Die durch diesen Mechanismus generierten Wirbel weisen eine niedrigere Ablösefrequenz als die durch Scherschicht-Moden bedingten Wirbel auf. Wake-Moden sind durch eine stark instationäre Strömung mit chaotischem Verhalten charakterisiert, dadurch bedingt, dass die Interaktion zwischen der freien Scherschicht und der Hohlraum-Strömung deutlich stärker ausgeprägt ist.

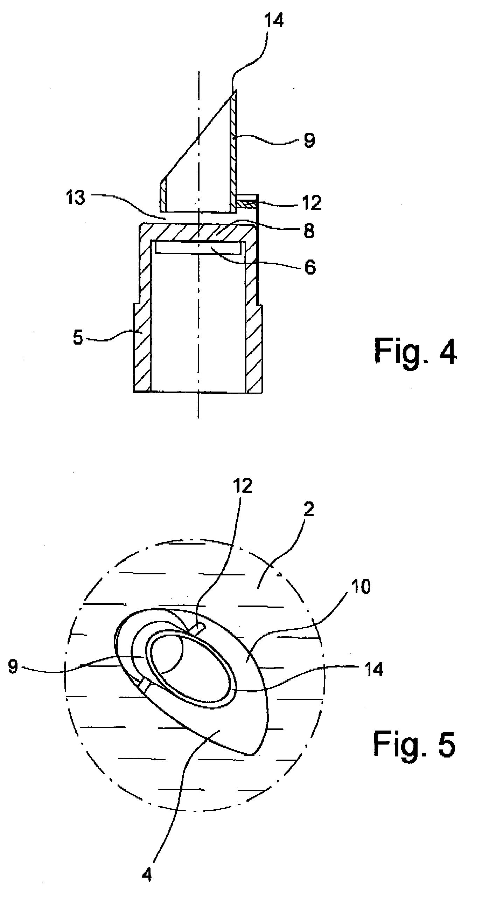

Zur Lösung des zuvor dargestellten Problems, das aus den von den Wandlertaschen generierten Wirbeln resultiert, ist bereits vorgeschlagen worden, die Wandlertaschen mit Kunststoff auszufüllen (vgl. die Fig. 4-9 auf Seite 257 der Literaturstelle "Ultrasonic Measurments for Process Control", aaO). Dabei entstehen jedoch die gleichen, auf dem Snellius-Gesetz beruhenden Nachteile wie bei Ultraschall-Durchflussmessern, bei denen die Ultraschallwandler von außen auf dem Messrohr befestigt sind, also bei der sogenannten "Clamp-on-Anordnung". Zusätzlich gibt es Probleme mit der akustischen Impedanz und Probleme mit dem die Wandlertaschen ausfüllenden Kunststoff, insbesondere bei höheren Temperaturen. Die mit dem Ausfüllen der Wandlertaschen mit Kunststoff verbundenen Nachteile und Probleme sind der Grund dafür, warum diese Ausführung in die Praxis keinen Eingang gefunden hat.

Mit dem Problem, das aus den von den Wandlertaschen generierten Wirbeln resultiert, hat sich die Fachwelt auch bereits anderweitig befasst. Dazu wird auch verwiesen auf die DE 196 48 784 C2, die US 6,189,389 B1, die US 6,748,811 B1 und die WO 2012 084392 A1. Aus der DE 196 48 784 C2, der US 6,189,389 B1 und der US 6,748,811 B1 sind Ultraschall-Durchflussmesser bekannt, bei denen die Wandlertaschen eingangsseitig mit einem Maschen aufweisenden Gitter versehen sind. Eine andere Ausführungsform zeigt die WO 2012 084392 A1, nämlich eine solche, bei der in die Wandlertasche des Messrohres vor das Ultraschallfenster des Ultraschallwandlers senkrecht zum Ultraschallfenster des Ultraschallwandlers ein Leitblech eingesetzt ist.

Ausgehend von dem beschriebenen Stand der Technik und den beschriebenen Problemen, die aus den von den Wandlertaschen generierten Wirbeln resultieren, liegt der Erfindung die Aufgabe zugrunde, einen Ultraschall-Durchflussmesser anzugeben, bei dem das aus den von den Wandlertaschen generierten Wirbeln resultierende Problem besser gelöst ist als im Stand der Technik.

Der erfindungsgemäße Ultraschall-Durchflussmesser, bei dem die zuvor hergeleitete und aufgezeigte Aufgabe gelöst ist, ist zunächst und im Wesentlichen dadurch gekennzeichnet, dass eine zylinderförmige Abschirmung vorgesehen ist, die vorzugsweise rohrförmig ausgeführt ist. Im Einzelnen ist dabei die zylinderförmige, vorzugsweise rohrförmig ausgeführte Abschirmung so realisiert, dass einerseits die Ausbildung von Wirbeln entlang des Messweges beziehungsweise der Einfluss der Wirbel auf die Messung reduziert wird, andererseits das Ultraschallsignal beziehungsweise der Ausbreitungsweg des Ultraschallsignals nicht, jedenfalls nicht wesentlich beeinflusst beziehungsweise beeinträchtigt wird. Die der Erfindung zugrundeliegende Idee ist also nicht, die Wirbelbildung an der Wandlertasche zu verhindern, sondern vielmehr die entstehenden Wirbel gegenüber dem Ausbreitungsweg des Ultraschallsignals abzuschirmen, wobei der Einfluss der Abschirmung auf das akustische Verhalten des Ultraschallwandlers vernachlässigbar sein soll.

Besondere Ausführungsformen von zu erfindungsgemäßen Ultraschall-Durchflussmessern gehörenden Ultraschallwandlern werden weiter unten in Verbindung mit zeichnerisch dargestellten Ausführungsformen noch erläutert. Hier sei nur ergänzend darauf hingewiesen, dass es möglich ist, dass in besonderen Fällen, abhängig von der vorliegenden Geometrie und der Arbeitsfrequenz des Ultraschallwandlers - die erfindungsgemäß vorgesehene Abschirmung selbst anfängt zu vibrieren. Werden diese Vibrationen zu stark, ist es denkbar, dass die Abschirmung mit den vom Ultraschallwandler generierten Signalen interferiert und damit das Ultraschallsignal beeinflusst. Um dieses Problem zu umgehen, sind erfindungsgemäß besondere Maßnahmen vorgese-hen, die eine Entkopplung des Ultraschallwandlers von der zylinderförmigen Abschirmung bewirken. Auch insoweit wird darauf verwiesen, was weiter unten in Verbindung mit zeichnerisch dargestellten Ausführungsformen noch erläutert wird.

Im Einzelnen gibt es nun verschiedene Möglichkeiten der Ausgestaltung und Weiterbildung des erfindungsgemäßen Ultraschall-Durchflussmessers. Dazu wird verwiesen auf die dem Patentanspruch 1 nachgeordneten Patentansprüche und auf die Beschreibung in Verbindung mit der Zeichnung. In der Zeichnung zeigen

Fig. 1    ein Ausführungsbeispiel eines erfindungsgemäßen Ultraschall-Durchflussmessers mit einer ersten Ausführungsform eines zu dem erfindungsgemäßen Ultraschall-Durchflussmesser gehörenden Ultraschallwandlers,

Fig. 2    eine Seitenansicht des zu dem Ultraschall-Durchflussmesser nach Fig. 1 gehörenden Ultraschallwandlers,

Fig. 3    eine zweite Ausführungsform eines zu einem erfindungsgemäßen Ultraschall-Durchflussmesser gehörenden Ultraschallwandlers,

Fig. 4    eine dritte Ausführungsform eines zu einem erfindungsgemäßen Ultraschall-Durchflussmesser gehörenden Ultraschallwandlers und

Fig. 5    eine vierte Ausführungsform eines zu einem erfindungsgemäßen Ultraschall-Durchflussmesser gehörenden Ultraschallwandlers.

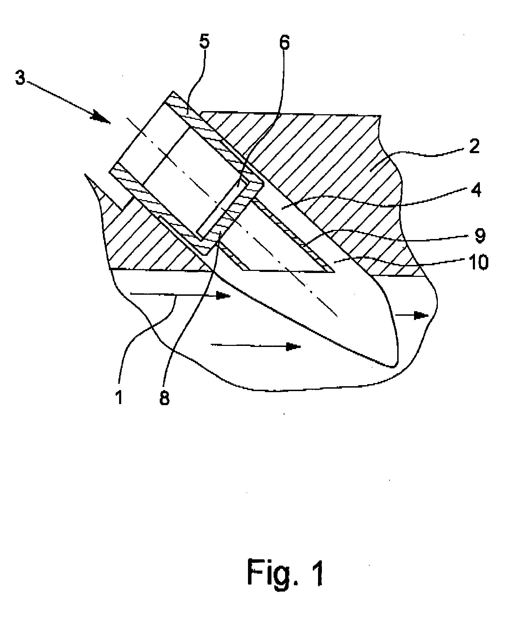

Zu dem in Fig. 1 dargestellten Ultraschall-Durchflussmesser für die Messung des Durchflusses eines strömenden Mediums 1 gehören ein Messrohr 2 und ein Ultraschallwandler 3. Das Messrohr 2 weist eine Wandlertasche 4 auf. Der Ultraschallwandler 3 ist mit Kontakt zum strömenden Medium 1 in der Wandlertasche 4 des Messrohres 2 vorgesehen und weist ein Wandlergehäuse 5 und ein Wandlerelement 6 auf. Das Wandlergehäuse 5 weist an seiner in das Innere des Messrohres 2 weisenden Stirnfläche 7 ein Ultraschallfenster 8 auf.

Erfindungsgemäß ist eine Abschirmung 9 vorgesehen, deren Zweck, Wirkung und Ausgestaltung im Folgenden näher erläutert wird.

Wie die Fig. 1, 2 und 3 zeigen, ist in den in diesen Figuren dargestellten Ausführungsformen von zu erfindungsgemäßen Ultraschall-Durchflussmessern gehörenden Ultraschallwandlern 3 die Abschirmung 9 an der an das Innere des Messrohres 2 weisenden Stirnseite 7 des Wandlergehäuses 5 vorgesehen, konkret am Ultraschallfenster 8 des Wandlergehäuses 5. Im Übrigen gilt für diese Ausführungsformen, dass die Abschirmung 9 fest mit dem Wandlergehäuse 5 beziehungsweise mit dem Ultraschallfenster 8 des Wandlergehäuses 5 verbunden ist. Dabei kann die "feste Verbindung" der Abschirmung 9 mit dem Wandlergehäuse 5 beziehungsweise mit dem Ultraschallfenster 8 des Wandlergehäuses 5 auch so realisiert sein, dass die Abschirmung 9 und das Wandlergehäuse 5 beziehungsweise das Ultraschallfenster 8 des Wandlergehäuses 5 einstückig ausgeführt sind.

In der in Fig. 4 dargestellten Ausführungsformen eines zu einem erfindungsgemäßen Ultraschall-Durchflussmesser gehörenden Ultraschallwandlers 3 ist die Abschirmung 9 in gewisser Weise elastisch mit dem Wandlergehäuse 5 verbunden; es könnte auch eine elastische Verbindung der Abschirmung 9 mit dem Ultraschallfenster 8 des Wandlergehäuses 5 realisiert werden.

Nur in den Fig. 1 und 5 ist gezeigt, dass bei in die Wandlertasche 4 eingesetztem Ultraschallwandler 3 ein Hohlraum 10 zwischen der Abschirmung 9 und der Wandlertasche 4 verbleibt.

Die Fig. 3 einerseits sowie die Fig. 4 und 5 andererseits zeigen besondere Ausführungsformen von zu erfindungsgemäßen Ultraschall-Durchflussmessern gehörenden Ultraschallwandlern 3. Bei der Ausführungsform nach Fig. 3 sind am Fuß der Abschirmung 9, also dort, wo die Abschirmung 9 mit dem Ultraschallfenster 8 des Wandlergehäuses 5 verbunden ist, Ausnehmungen 11 vorgesehen. Demgegenüber gilt für die in der Fig. 4 dargestellte Ausführungsform, dass die Abschirmung 9 durch mindestens ein Befestigungselement 12 mit dem Wandlergehäuse 5 verbunden ist; denkbar ist jedoch auch eine Verbindung der Abschirmung 9 mit dem Ultraschallfenster 8 des Wandlergehäuses 5 durch ein Befestigungselement.

Bei allen in den Figuren dargestellten Ausführungsformen von zu erfindungsgemäßen Ultraschall-Durchflussmessern gehörenden Ultraschallwandlern 3 ist die Abschirmung 9 mit dem Ultraschallfenster 8 des Wandlergehäuses 5 verbunden (Fig. 1, 2 und 3) beziehungsweise mit dem Wandlergehäuse 5 verbunden (Fig. 4). Denkbar ist jedoch auch eine Ausführungsform nach Fig. 5, bei der die Abschirmung 9 durch mindestens ein Befestigungselement 12 an der Innenwand der Wandlertasche 4 des Messrohres 2 befestigt ist.

Weiter oben ist bereits darauf hingewiesen worden, dass die Abschirmung 9 fest mit dem Wandlergehäuse 5 beziehungsweise mit dem Ultraschallfenster 8 des Wandlergehäuses 5 verbunden sein kann, dass aber auch eine elastische Verbindung der Abschirmung 9 mit dem Wandlergehäuse 5 beziehungsweise dem Ultraschallfenster 8 des Wandlergehäuses 5 möglich ist. Zwischen einer "festen Verbindung" und einer "elastischen Verbindung" ist der Übergang "fließend". Während bei den Ausführungsformen nach den Fig. 1 und 2 die Abschirmung 9 "besonders fest" mit dem Ultraschallfenster 8 des Wandlergehäuses 5 verbunden ist, gilt für die Ausführungsform nach Fig. 4, dass die Abschirmung 9 "besonders elastisch" mit dem Wandlergehäuse 5 verbunden ist; dafür ist auch ein Freiraum 13 zwischen der Abschirmung 9 und dem Ultraschallfenster 8 des Wandlergehäuses 5 realisiert. Zwischen der "besonders festen" Verbindung zwischen der Abschirmung 9 und dem Ultraschallfenster 8 des Wandlergehäuses 5 nach den Fig. 1 und 2 und der "besonders elastischen" Verbindung der Abschirmung 9 mit dem Wandlergehäuses 5 nach Fig. 4 liegt die Ausführungsform nach Fig. 3, bei der dadurch eine gewisse Elastizität realisiert ist, dass am Fuß der Abschirmung 9, also dort, wo die Abschirmung 9 mit dem Ultraschallfenster 8 des Wandlergehäuses 5 verbunden ist, Ausnehmungen 11 vorgesehen sind.

Eine richtige Interpretation der in allen Figuren dargestellten Ausführungsformen von zu erfindungsgemäßen Ultraschall-Durchflussmessern gehörenden Ultraschallwandlern 3 führt ohne Weiteres bereits zu dem Ergebnis, dass die Abschirmung 9 jeweils eine geringe Wandstärke aufweist, relativ gering im Verhältnis zum Durchmesser der Abschirmung 9.

Im Übrigen zeigen die Fig. 1, 2, 3 und 4, dass bei den dargestellten Ausführungsformen von zu erfindungsgemäßen Ultraschall-Durchflussmessern gehörenden Ultraschallwandlern 3 die Abschirmung 9 jeweils achsensymmetrisch in Bezug auf das Ultraschallfenster 8 des Wandlergehäuses 5 ausgeführt ist, und die Fig. 1, 2 und 4 zeigen, dass in diesen Ausführungsformen die Abschirmung 9 an ihrem dem Wandlergehäuse 5 beziehungsweise dem Ultraschallfenster 8 des Wandlergehäuses 5 fernen Ende eine ebene Stirnfläche 14 aufweist. Denkbar ist jedoch auch, die Abschirmung an ihrem dem Wandlergehäuse beziehungsweise dem Ultraschallfenster des Wandlergehäuses fernen Ende mit einer nicht in einer Ebene liegenden Stirnfläche zu versehen, insbesondere mit einer Stirnfläche, die der Krümmung des Messrohres im Bereich der Wandlertasche entspricht.

Darauf hingewiesen sei noch, dass für alle in den Figuren dargestellten Ausführungsformen von zu erfindungsgemäßen Ultraschall-Durchflussmessern gehörenden Ultraschallwandlern 3 gilt, dass der Außendurchmesser der Abschirmung 9 kleiner ist als der Innendurchmesser der Wandlertasche 4, dass die Abschirmung 9 nicht (oder nur unwesentlich) in das strömende Medium 1 hineinragt und dass die Abschirmung 9 aus Metall, insbesondere aus Edelstahl, aus einer metallischen Legierung, aus Kunststoff oder aus Keramik bestehen kann.

Bei erfindungsgemäßen Ultraschall-Durchflussmessern ist die zuvor im Einzelnen beschriebene zylinderförmige, vorzugsweise rohrförmige Abschirmung 9 so im Detail realisiert, dass einerseits die Ausbildung von Wirbeln entlang des Messweges beziehungsweise der Einfluss der Wirbel auf die Gessung reduziert ist, andererseits jedoch das Ultraschallsignal beziehungsweise der Ausbreitungsweg des Ultraschallsignals nicht, jedenfalls nicht, wesentlich beeinflusst beziehungsweise beeinträchtigt ist.

**Patentansprüche**

1.   Ultraschall-Durchflussmesser für die Messung des Durchflusses eines strömenden Mediums (1), mit einem Messrohr (2) und mit einem Ultraschallwandler (3), wobei das Messrohr (2) eine Wandlertasche (4) aufweist, wobei der Ultraschallwandler (3) mit Kontakt zum strömenden Medium (1) in der Wandlertasche (4) des Messrohres (2) vorgesehen ist und ein Wandlergehäuse (5) und ein Wandlerelement (6) aufweist und wobei das Wandlergehäuse (5) ein Ultraschallfenster (8) aufweist,
     **dadurch gekennzeichnet,**
     **dass** eine zylinderförmige Abschirmung (9) vorgesehen ist.

2.   Ultraschall-Durchflussmesser nach Anspruch 1, **dadurch gekennzeichnet, dass** die Abschirmung (9) rohrförmig ausgeführt ist.

3.   Ultraschall-Durchflussmesser nach Anspruch 1 oder 2, **dadurch gekennzeichnet, dass** die Abschirmung (9) an der in das Innere des Messrohres (2) weisenden Stirnseite (7) des Wandlergehäuses (5) vorgesehen ist.

4.   Ultraschall-Durchflussmesser nach Anspruch 3, **dadurch gekennzeichnet, dass** die Abschirmung (9) am Ultraschallfenster (8) des Wandlergehäuses (5) vorgesehen ist.

5.   Ultraschall-Durchflussmesser nach Anspruch 3 oder 4, **dadurch gekennzeichnet, dass** die Abschirmung (9) fest mit dem Wandlergehäuse (5) bzw. mit dem Ultraschallfenster (8) des Wandlergehäuses (5) verbunden ist.

6.   Ultraschall-Durchflussmesser nach Anspruch 5, **dadurch gekennzeichnet, dass** die Abschirmung (9) und das Wandlergehäuse (5) bzw. das Ultraschallfenster (8) des Wandlergehäuses (5) einstückig ausgeführt sind.

7.   Ultraschall-Durchflussmesser nach einem der Ansprüche 1 bis 4, **dadurch gekennzeichnet, dass** die Abschirmung (9) elastisch mit dem Wandlergehäuse (5) bzw. dem Ultraschallfenster (8) des Wandlergehäuses (5) verbunden ist, insbesondere dadurch, dass eine elastische Verbindung durch Ausnehmungen (11) am Fuß der Abschirmung (9) realisiert ist.

8.   Ultraschall-Durchflussmesser nach einem der Ansprüche 1 bis 5 oder nach Anspruch 7, **dadurch gekennzeichnet, dass** die Abschirmung (9) durch mindestens ein Befestigungselement (12) mit dem Wandlergehäuse (5) bzw. dem Ultraschallfenster (8) des Wandlergehäuses (5) verbunden ist.

9.   Ultraschall-Durchflussmesser nach Anspruch 1 oder 2, **dadurch gekennzeichnet, dass** die Abschirmung an der Innenwand der Wandlertasche des Messrohres befestigt ist.

10.  Ultraschall-Durchflussmesser nach einem der Ansprüche 1 bis 9, **dadurch gekennzeichnet, dass** die Abschirmung (9) eine relativ geringe Wandstärke aufweist, relativ gering im Verhältnis zu ihrem Durchmesser.

11.  Ultraschall-Durchflussmesser nach einem der Ansprüche 1 bis 10, **dadurch gekennzeichnet, dass** die Abschirmung (9) achsensymmetrisch in Bezug auf das Ultraschallfenster (8) des Wandlergehäuses (5) ausgeführt und/oder angeordnet ist.

12.  Ultraschall-Durchflussmesser nach einem der Ansprüche 1 bis 11, **dadurch gekennzeichnet, dass** die Abschirmung (9) an ihrem dem Wandlergehäuse (5) bzw. dem Ultraschallfenster (8) des Wandlergehäuses (5) fernen Ende eine ebene Stirnfläche (14) aufweist.

13.  Ultraschall-Durchflussmesser nach einem der Ansprüche 1 bis 11, **dadurch gekennzeichnet, dass** die die Abschirmung an ihrem dem Wandlergehäuse bzw. dem Ultraschallfenster des Wandlergehäuses fernen Ende eine nicht in einer Ebene liegende Stirnfläche aufweist.

14.  Ultraschall-Durchflussmesser nach einem der Ansprüche 1 bis 13, **dadurch gekennzeichnet, dass** der Außendurchmesser der Abschirmung (9) kleiner ist als der Innendurchmesser der Wandlertasche (4).

15.  Ultraschall-Durchflussmesser nach einem der Ansprüche 1 bis 14, **dadurch gekennzeichnet, dass** die Abschirmung (9) nicht oder nur unwesentlich in das strömende Medium (1) hineinragt.

16.  Ultraschall-Durchflussmesser nach einem der Ansprüche 1 bis 15, **dadurch gekennzeichnet, dass** die Abschirmung (9) aus Metall, insbesondere aus Edelstahl, aus einer metallischen Legierung, aus Kunststoff oder aus Keramik besteht.

Fig. 1

14

9

7

6

5

Fig. 2

14

9

8

11

6

5

Fig. 3

## Fig. 4

## Fig. 5

**Europäisches Patentamt**
**European Patent Office**
**Office européen des brevets**

# EUROPÄISCHER RECHERCHENBERICHT

Nummer der Anmeldung

EP 14 00 3435

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP S63 26537 A (KAWASAKI STEEL CO) 4. Februar 1988 (1988-02-04) * das ganze Dokument * ----- | 1,3-5,7, 8,11-15 | INV. G01F1/66 G10K11/00 |
| X | EP 1 610 587 A1 (MATSUSHITA ELECTRIC IND CO LTD [JP] PANASONIC CORP [JP]) 28. Dezember 2005 (2005-12-28) * das ganze Dokument * ----- | 1-5,7,8, 10-12, 14,15 | |
| X | EP 0 125 845 A1 (BRITISH GAS CORP [GB]) 21. November 1984 (1984-11-21) * das ganze Dokument * ----- | 1-5, 7-11, 13-15 | |
| X | DE 101 53 297 A1 (KROHNE AG BASEL [CH]) 3. April 2003 (2003-04-03) * das ganze Dokument * ----- | 1-8, 10-12, 14-16 | |
| X | US 4 173 889 A (FORSTER MICHEL [FR] ET AL) 13. November 1979 (1979-11-13) * das ganze Dokument * ----- | 1,2,5, 7-10,12, 15,16 | RECHERCHIERTE SACHGEBIETE (IPC) G01F G10K |
| X | EP 0 249 689 A1 (LANDIS & GYR GMBH [DE]) 23. Dezember 1987 (1987-12-23) * das ganze Dokument * ----- | 1-5,7-16 | |

Der vorliegende Recherchenbericht wurde für alle Patentansprüche erstellt

| Recherchenort | Abschlußdatum der Recherche | Prüfer |
|---|---|---|
| München | 2. April 2015 | Roetsch, Patrice |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

**EP 2 871 449 A1**

**ANHANG ZUM EUROPÄISCHEN RECHERCHENBERICHT
ÜBER DIE EUROPÄISCHE PATENTANMELDUNG NR.**

EP 14 00 3435

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-04-2015

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| JP | S6326537 | A | 04-02-1988 | KEINE | | | |
| EP | 1610587 | A1 | 28-12-2005 | AT | 513188 | T | 15-07-2011 |
| | | | | AU | 2003231547 | A1 | 23-11-2004 |
| | | | | CN | 1703929 | A | 30-11-2005 |
| | | | | EP | 1610587 | A1 | 28-12-2005 |
| | | | | JP | 3722827 | B2 | 30-11-2005 |
| | | | | US | 2005139013 | A1 | 30-06-2005 |
| | | | | WO | 2004098234 | A1 | 11-11-2004 |
| EP | 0125845 | A1 | 21-11-1984 | AU | 584265 | B2 | 18-05-1989 |
| | | | | AU | 2789584 | A | 15-11-1984 |
| | | | | AU | 6695286 | A | 09-04-1987 |
| | | | | CA | 1224559 | A1 | 21-07-1987 |
| | | | | DE | 3485071 | D1 | 24-10-1991 |
| | | | | EP | 0125845 | A1 | 21-11-1984 |
| | | | | GB | 2139755 | A | 14-11-1984 |
| | | | | JP | H0535363 | B2 | 26-05-1993 |
| | | | | JP | S6035220 | A | 23-02-1985 |
| | | | | US | 4646575 | A | 03-03-1987 |
| DE | 10153297 | A1 | 03-04-2003 | KEINE | | | |
| US | 4173889 | A | 13-11-1979 | DE | 2812464 | A1 | 28-09-1978 |
| | | | | FR | 2385084 | A1 | 20-10-1978 |
| | | | | GB | 1587892 | A | 15-04-1981 |
| | | | | US | 4173889 | A | 13-11-1979 |
| EP | 0249689 | A1 | 23-12-1987 | CH | 670156 | A5 | 12-05-1989 |
| | | | | DE | 3767043 | D1 | 07-02-1991 |
| | | | | EP | 0249689 | A1 | 23-12-1987 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 19648784 C2
- US 6189389 B1
- US 6748811 B1
- WO 2012084392 A1

**In der Beschreibung aufgeführte Nicht-Patentliteratur**

- Sensoren, Messaufnehmer. **LAWRENCE C. LYNNWORTH.** Ultrasonic Measurements for Process Control. ACADE- MIC PRESS, INC, 532, , 18, , 21